# EUROPEAN PATENT SPECIFICATION

(11) **EP 0 466 923 B1**
(45) Date of publication and mention of the grant of the patent: **18.10.1995**
(21) Application number: 90902833.4
(22) Date of filing: 08.02.1990
(51) Int. Cl.: F16J 15/22

(54) **PACKING**
PACKUNG
GARNITURE D'ETANCHEITE

(43) Date of publication of application: 22.01.1992
(73) Proprietor: NIPPON PILLAR PACKING CO., LTD., Osaka-shi, Osaka 532 (JP)
(72) Inventor: UEDA, Takahisa, Sanda-shi, Hyogo 669-13 (JP)
(74) Representative: Fleuchaus, Leo, Dipl.-Ing.
(86) International application number: JP9000157
(87) International publication number: WO9112446

(56) References cited:
- JP-A- 6 426 069
- JP-A-63 308 275

## Description

### Technical Field

The present invention relates to packing suitably used as gland packing to be used at a shaft sealing portion in a fluid apparatus.

### Background Art

As the material of gland packing used at, for example, a shaft sealing portion in a fluid apparatus or the like, there is known a material using, as its base material, expanded graphite excellent in compression-restoring force and sealing properties.

Gland packing of such material is made by a compression molding method of the laminate type, the die molding type, the tip molding type, the ribbon pack type or the like. Such gland packing should be previously made in the form of a ring having an inner diameter corresponding to the outer diameter of a shaft to be sealed. Accordingly, the gland packing cannot be used for a shaft of which outer diameter is not fit for the inner diameter of the ring-like packing. Thus, such packing lacks versatility. Further, the expanded graphite itself is poor in tensile strength and therefore fragil. This makes it difficult to take out, for replacement, such gland packing which has been mounted on a stuffing box or the like. Thus, the gland packing presents a problem in view of practical utility.

In addition, the respective types of the compression molding present the following problems.

In the laminate-type, the yield is low, leading to increase in production cost. In the die molding type and the tip molding type, gland packing is molded with the use of molds, causing the production cost to be increased. Further, such gland packing lacks versatility. The ribbon pack type presents poor workability.

The problems above-mentioned may be solved by making the expanded graphite in the form of a string, so that the string-like expanded graphite may be used as cut into a predetermined length according to the diameter of a shaft to be sealed, likewise braided packing. However, the expanded graphite itself is apparently caterpillar-like particles, each of which is expanded in the direction of the C-axis of the crystal of a graphite particle. These caterpillar-like particles as agglomerated may be compression-molded into a sheet. However, the expanded graphite even made in such a sheet, is poor in tensile strength and therefore fragile. Accordingly, such a sheet cannot be cut into yarn with the use of which a braided body is to be made. It is therefore not possible to apply such expanded graphite to packing which may be used as cut to a predetermined length according to the diameter of a shaft to be sealed and wound around the outer periphery thereof, likewise braided packing.

### Disclosure of Invention

In view of the background art above-mentioned, the present invention is proposed with the object of providing packing in the form of a string improved in practical utility and versatility. After hard study of the arrangement of a knitting yarn using expanded graphite, the inventor has found a way to make a knitting yarn of expanded graphite by bonding expanded graphite to a reinforcing fiber yarn with adhesives, so that the synergistic action of the reinforcing fiber yarn and the expanded graphite gives, to the resultant knitting yarn, a great compression-restoring force, excellent sealing properties, and strong tensile strength and toughness. A plurality of such knitting yarns may be put together to form a core member and the core member may be then covered, at the outer periphery thereof, with a braided body of the knitting yarns, thereby to make the assembly in the form of a string. A plurality of such knitting yarns as put together may be braided in the form of a string. A plurality of such knitting yarns as put together may be twisted in the form of a string.

According to the packing of the present invention, the strong tensile strength and toughness of the reinforcing fiber yarns are given to the knitting yarns. Thus, the knitting yarns may be braided or twisted without the yarns cut. It is therefore possible to form a string-like packing in which the core member made of the knitting yarns is covered, at the outer periphery thereof, with a braided body of the knitting yarns. Further, the great compression-restoring force and excellent sealing properties of the expanded graphite are given to the core member and the braided body, thus assuring such sealing properties as inevitably required for packing.

Further, a plurality of such knitting yarns provided with strong tensile strength and toughness may be put together and braided. It is therefore possible to form a braided body (as square-knitted) having strong tensile strength and toughness. The great compression-restoring force and excellent sealing properties of the expanded graphite are given to the braided body, thus assuring such sealing properties as inevitably required for packing.

Further, a plurality of such knitting yarns having strong tensile strength and toughness may be put together and twisted. It is therefore possible to form a twisted string-like member having such strong tensile strength and toughness. In addition, the great compression-restoring force and excellent sealing properties of the expanded graphite are given to this string-like member, thus assuring such sealing properties as inevitably required for packing.

### Brief Description of Drawings

Figure 1 is a perspective view, with portions broken away, of a first embodiment of packing in accordance with the invention;
Figure 2 is a perspective view, with portions broken away, of an example of a knitting yarn;
Figure 3 is a perspective view of a second embodiment of packing in accordance with the invention;
Figure 4 is a perspective view of a third embodiment of packing in accordance with the invention;
Figure 5 is a perspective view of another example of the knitting yarn;
Figures 6 to 10 are views of various examples of a reinforcing fiber yarn; and
Figures 11A, 11B and Figures 12A, 12B are views illustrating variations of the distances between knitting yarns fed from bobbins and a knitting point in circular knitting and square knitting, respectively.

### Best Mode for Carrying Out the Invention

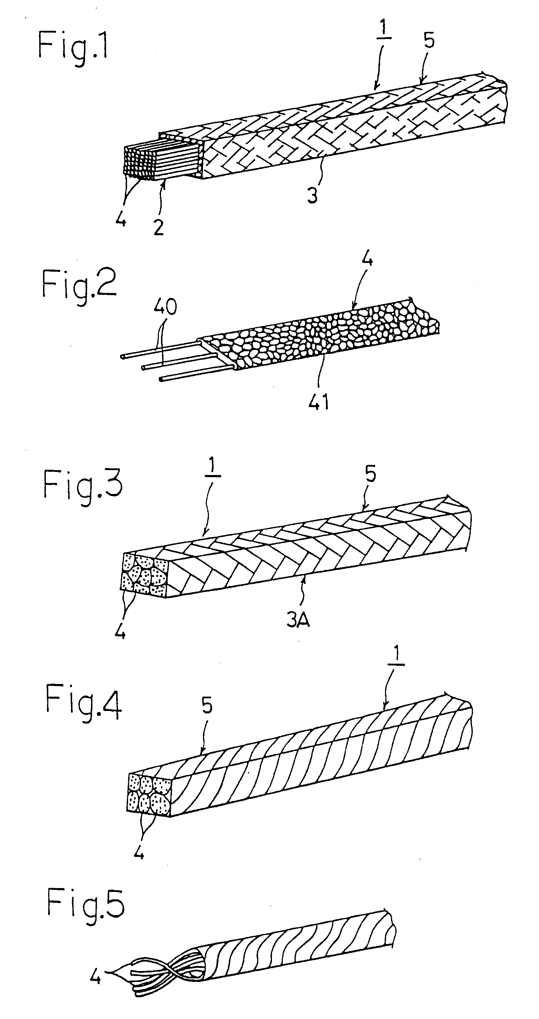

Fig. 1 is a perspective view, with portions broken away, of a first embodiment of packing in accordance with the invention.

In Fig. 1, packing 1 comprises a core member 2 and a braided body 3 covering the outer periphery of the core member 2, the braided body 3 being made by, for example, circular-knitting. The core member 2 is formed by longitudinally arranging a plurality of knitting yarns 4 as put together. The braided body 3 is formed by circular-knitting the knitting yarns 4.

As shown in Fig. 2, each knitting yarn 4 comprises a plurality of longitudinally arranged reinforcing fiber yarns 40 made of, for example, cotton, and caterpillar-like expanded graphite 41 integrally bonded to both surfaces of the yarns 40 with adhesives (for example, acrylic ester) (not shown).

The cotton yarns used as the reinforcing fiber yarns 40 have, on the surfaces thereof, an infinite number of extremely short and fine fibers, i.e., so-called fuzz. This improves the adhesion of the adhesives. Accordingly, the reinforcing fiber yarns 40 and the expanded graphite 41 are securely bonded to each other to prevent the expanded graphite 41 from partially falling from the reinforcing fiber yarns 40.

Thus, the knitting yarns 4 are formed by integrally bonding, with adhesives, the expanded graphite 41 to both surfaces of a plurality of longitudinally arranged reinforcing fiber yarns 40 made of, for example, cotton. The strong tensile strength and toughness of the reinforcing fiber yarns 40 are given to the knitting yarns 4. Accordingly, the knitting yarns 4 may be braided without the yarns 4 cut. It is therefore possible to form a string-like member 5 in which the outer periphery of the core member 2 made of the knitting yarns 4 is covered with the braided body 3 as obtained by circular-knitting the knitting yarns 4. This string-like member 5 has characteristics excellent in tensile strength and toughness. Thus, this string-like member 5 may be used, as the packing 1, as cut to a predetermined length according to, for example, the diameter of a shaft to be sealed. This improves the packing 1 in versatility and practical utility. Further, the great compression-restoring force and excellent sealing properties of the expanded graphite 41 are given to the core member 2 and the braided body 3 forming the packing 1. It is therefore assured that the packing 1 is provided with such excellent sealing properties as inevitably required for packing.

Fig. 3 is a perspective view of a second embodiment of packing in accordance with the invention. In Fig. 3, like parts are designated by like numerals used in Fig. 1 and the detailed description of such like parts is here omitted.

In Fig. 3, packing 1 is made in the form of a string-like member 5 made of a braided body 3A as obtained by square-braiding eight knitting yarns 4.

The strong tensile strength and toughness of reinforcing fiber yarns 40 are given to the knitting yarns 4. Accordingly, the knitting yarns 4 may be braided (as square-knitted) without the yarns 4 cut. Thus, the string-like member 5 may be made of the braided body 3A having characteristics excellent in tensile strength and toughness. It is therefore possible to use, as the packing 1, this string-like member 5 as cut to a predetermined length according to, for example, the diameter of a shaft. This improves the packing 1 in versatility and practical utility. Further, the strong compression-restoring force and excellent sealing properties of the expanded graphite 41 are given to the braided body 3A forming the packing 1. Accordingly, the packing 1 may be provided with such sealing properties as indispensably required for packing.

Fig. 4 is a perspective view of a third embodiment of packing in accordance with the invention. In Fig. 4, like parts are designated by like numerals used in Fig. 1 and the detailed description of such like parts is here omitted.

In Fig. 4, packing 1 is made in the form of a string-like member 5 by roll-molding six knitting yarns 4 as bound while these knitting yarns 4 are being twisted 20 times/m.

The strong tensile strength and toughness of the reinforcing fiber yarns 40 are given to the knitting yarns 4. Accordingly, the knitting yarns 4 may be twisted without the yarns 4 cut. It is therefore possible to form the string-like member 5 having strong tensile strength and toughness. Accordingly, this string-like member 5 may be used, as the packing 1, as cut to a predetermined length according to, for example, the diameter of a shaft to be sealed. This improves the packing 1 in versatility and practical utility. Further, the strong compression-restoring force and excellent sealing properties of the expanded graphite 41 are given to the twisted string-like member 5 forming the packing 1. Accordingly, the packing 1 may be provided with such sealing properties as indispensably required for packing.

In the foregoing, the description has been made of the expanded graphite 41 in the form of caterpillar-like particles. Alternately, there may be used expanded graphite sheets each of which is so cut as to have a small width of, for example, 5 mm or less.

Alternately, each knitting yarn 4 may be formed by bonding the expanded graphite 41 only on one surface of a plurality of reinforcing fiber yarns 40 with adhesives.

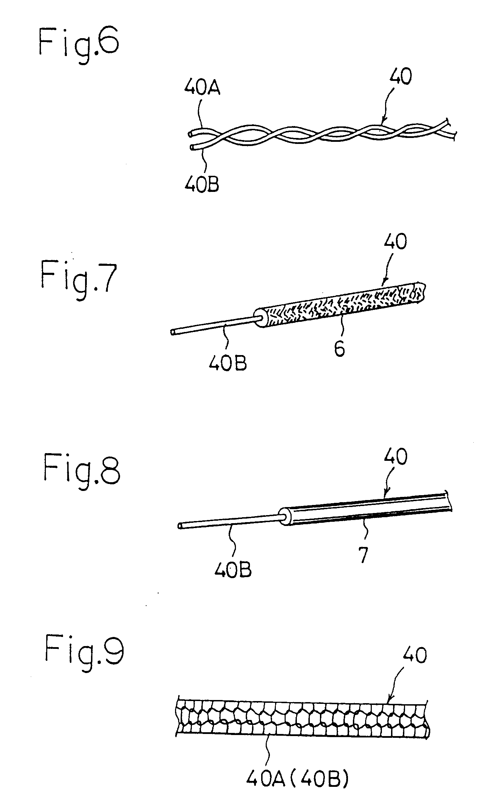

Further, the knitting yarns 4 may be used after twisted as shown in Fig. 5.

The reinforcing fiber yarns 40 forming the knitting yarns 4 may be made of, instead of cotton mentioned earlier, a single material which is selected from organic fibers such as rayon fibers, phenol fibers, aramid fibers, PBI fibers, PTFE fibers, PPS fibers, PEEK fibers and the like, which is selected from inorganic fibers such as glass fibers, carbon fibers, ceramic fibers and the like, or which is selected from metallic line members such as line members of stainless steel, Inconel, monel metal and the like.

The inorganic fibers and the metallic line members present no fuzz on the surfaces thereof, and are therefore slightly inferior in adhesion of the adhesives to the organic fibers. However, the proper selection of the adhesives enables the reinforcing fiber yarns 40 and the expanded graphite 41 to be bonded to each other in a relatively secure manner. This prevents the expanded graphite 41 from partially falling from the reinforcing fiber yarns 40. In the knitting yarns 4 made of such inorganic fibers or metallic line members, the tensile strength is considerably improved as compared with the knitting yarns 4 made of the organic fibers.

Figs. 6 to Fig. 10 respectively show modifications of the reinforcing fiber yarn 40.

In Fig. 6, the reinforcing fiber yarn 40 is made by twisting a yarn 40A made of a single material selected from the organic fibers mentioned earlier (cotton or aramid), and a yarn 40B made of a single material selected from the inorganic fibers and metallic line members mentioned earlier (glass fibers, carbon fibers or stainless steel line members). This reinforcing fiber yarns 40 may be improved in toughness and adhesion of adhesives by the organic fibers, and also improved in tensile strength and toughness by the inorganic fibers or metallic line members.

In Fig. 7, the reinforcing fiber yarn 40 comprises (i) a yarn 40B made of at least one material selected from the inorganic fibers and metallic line members mentioned earlier (glass fibers, carbon fibers or stainless steel line members), and (ii) short fibers 6 made of a single material selected from the organic fibers mentioned earlier (cotton or aramid), the short fibers 6 covering the surface of the yarn 40B. This reinforcing fiber yarn 40 may be improved in toughness and adhesion of adhesives by the covering layer of the short fibers 6, and also improved in tensile strength and toughness by the yarn 40B made of at least one material selected from the inorganic fibers and the metallic line members. The short fibers 6 forming the covering layer may be made of a composite short fiber yarn containing, in combination, fibers made of two or more types selected from the organic fibers.

In Fig. 8, the reinforcing fiber yarn 40 comprises a yarn 40B made of at least one material selected from the inorganic fibers and metallic line members mentioned earlier (glass fibers, carbon fibers or stainless steel line members), this yarn 40B being covered with, for example, pulp sheet-form 7. This reinforcing fiber yarn 40 may be improved in toughness and adhesion of adhesives by the covering layer of the pulp sheet-form 7, and also improved in tensile strength and toughness by the yarn 40B made of at least one material selected from the inorganic fibers and the metallic line members.

In Fig. 9, the reinforcing fiber yarn 40 is made by knitting either a yarn 40A made of a single material selected from the organic fibers mentioned earlier (cotton or aramid) or a yarn 40B made of a single material selected from the inorganic fibers and metallic line members mentioned earlier (glass fibers, carbon fibers or stainless line members). This reinforcing fiber yarn 40 may be improved in adhesion of adhesives by the concavo-convex knitted portions in the knit structure thereof. Further, the stretching properties of the knit structure itself may absorb a tensile force. This results in increase in tolerance for stretching, thus improving the toughness.

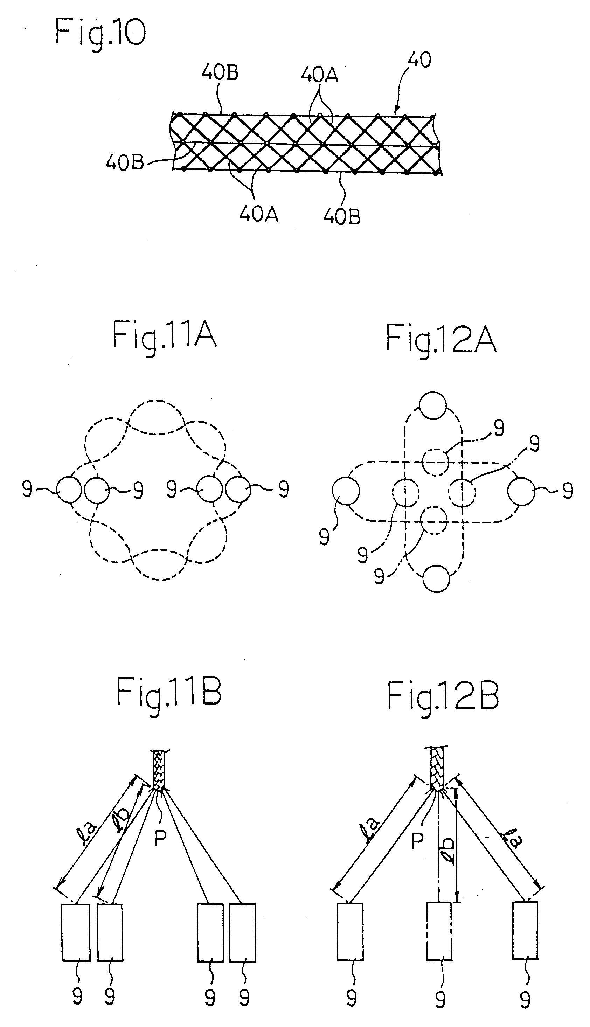

In Fig. 10, the reinforcing fiber yarn 40 comprises (i) a plurality of longitudinally arranged fibers 40B in parallel to one another, made of a single material selected from the inorganic fibers and metallic line members mentioned earlier (glass fibers, carbon fibers or stainless steel line members), and (ii) fibers 40A made of a single material selected from the organic fibers mentioned earlier (cotton or aramid), the fibers 40A being entangled with the fibers 40B so that the fibers 40B are maintained in parallel with one another. This reinforcing fiber yarn 40 may be improved in toughness and adhesion of adhesives by the organic fibers, and also improved in tensile strength and toughness by the inorganic fibers or the metallic line members.

The strong tensile strength and toughness of the reinforcing fiber yarns 40 are given to the knitting yarn 4. Thus, the knitting yarns 4 may be readily braided or twisted without the yarns 4 cut. More specifically, when carrying out circular-knitting while drawing out the knitting yarns 4 from a plurality of bobbins 9 adapted to be moved along loci shown by broken lines as shown in Figs. 11A and 11B, there is produced a small difference between the distance 1a between a knitting point P and each of the bobbins 9 as located in the mostouter parts of one locus, and the distance 1b between the knitting point P and each of the bobbins 9 as located in the mostinner parts of the other locus. In this case, a relatively small tensile force is applied to the knitting yarns 4, so that the yarns 4 may be readily braided. On the other hand, when carrying out square-knitting while drawing out the knitting yarns 4 from a plurality of bobbins 9 adapted to be moved along diagonal loci shown by broken lines as shown in Figs. 12A and 12B, there is produced a great difference between the distance 1a between a knitting point P and each of the bobbins 9 as located in the mostouter parts of one locus, and the distance 1b between the knitting point P and each of the bobbins 9 as located in the center parts of the other locus. In this case, a relatively great tensile force is applied to the knitting yarns 4. Even in this case, the yarns 4 may be braided.

### Industrial Applicability

In packing using expanded graphite as a base material, the present invention eliminates a need for provision of a variety of annular packings according to the diameters of shafts to be sealed, as conventionally required for molded packing made of expanded graphite. The packing of the present invention has not only such sealing properties as inevitably required for packing, but also strong tensile strength and toughness. Thus, the packing of the present invention may be suitably used as gland packing or a sealing member for static members.

## Claims

1. Packing comprising knitting yarns,
each of said knitting yarns (4) including a plurality of longitudinally arranged reinforcing fiber yarns (40) and expanded graphite (41) integrally bonded to at least one side of said reinforcing fiber yarns (40) with adhesives,
a plurality of said knitting yarns (4) being put together to form a core member (2), and a plurality of said knitting yarns (4) being put together to form a braided body (3) covering said core member (2), at the outer periphery thereof.

2. Packing comprising knitting yarns,
each of said knitting yarns (4) including a plurality of longitudinally arranged reinforcing fiber yarns (40) and expanded graphite (41) integrally bonded to at least one side of said reinforcing fiber yarns (40) with adhesives, and
a plurality of said knitting yarns (4) being put together and braided.

3. Packing comprising knitting yarns,
each of said knitting yarns (4) including a plurality of longitudinally arranged reinforcing fiber yarns (40) and expanded graphite (41) integrally bonded to at least one side of said reinforcing fiber yarns (40) with adhesives, and
a plurality of said knitting yarns (4) being put together and twisted.

4. Packing according to Claim 1, 2 or 3, wherein the expanded graphite (41) is in the form of caterpillar-like graphite powder.

5. Packing according to Claim 1, 2 or 3, wherein the expanded graphite (41) is in the form of a sheet having a narrow width.

6. Packing according to Claim 1, 2, 3, 4 or 5 wherein each of the knitting yarns (4) includes a plurality of longitudinally arranged reinforcing fiber yarns (40) and expanded graphite (41) integrally bonded to at least one side of said reinforcing fiber yarns (40) with adhesives, and said knitting yarns (4) are twisted.

7. Packing according to Claim 1, 2 or 3, wherein the reinforcing fiber yarn (40) is made of at least one material selected from organic fibers such as cotton fibers, rayon fibers, phenol fibers, aramid fibers, PBI fibers, PTFE fibers, PPS fibers, PEEK fibers and the like.

8. Packing according to Claim 1, 2 or 3, wherein the reinforcing fiber yarn (40) is made of at least one material selected from inorganic fibers such as glass fibers, carbon fibers, ceramic fibers and the like.

9. Packing according to Claim 1, 2 or 3, wherein the reinforcing fiber yarn (40) is made of at least one material selected from metallic line members such as stainless steel, Inconel, monel metal and the like.

10. Packing according to Claim 1, 2 or 3, wherein the reinforcing fiber yarn (40) comprises a composite fiber yarn made of (i) at least one material selected from the organic fibers and (ii) at least one material selected from the inorganic fibers and the metallic line members.

11. Packing according to Claim 1, 2 or 3, wherein the reinforcing fiber yarn (40) comprises
a fiber yarn or a composite fiber yarn made of at least one material selected from the inorganic fibers and the metallic line members,
said fiber yarn being covered, at the surface thereof, with short fibers (6) or composite short fibers made of at least one material selected from the organic fibers.

12. Packing according to Claim 1, 2 or 3, wherein the reinforcing fiber yarn (40) comprises a fiber yarn or a composite fiber yarn made of at least one material selected from the inorganic fibers and the metallic line members, said fiber yarn or said composite fiber yarn being covered, at the surface thereof, with pulp sheet-form (7).

13. Packing according to Claim 1, 2 or 3, wherein the reinforcing fiber yarn (40) comprises a yarn as obtained by twisting organic fibers and inorganic fibers or metallic line members.

14. Packing according to Claim 1, 2 or 3, wherein the reinforcing fiber yarn (40) is a yarn as obtained by knitting the organic fibers, the inorganic fibers or the metallic line members.

15. Packing according to Claim 1, 2 or 3, wherein the reinforcing fiber yarn (40) comprises a plurality of longitudinally arranged inorganic fibers or metallic line members in parallel with one another, and organic fibers entangled with said inorganic fibers or said metallic line members so that said inorganic fibers or said metallic line members are maintained in parallel with one another.

## Patentansprüche

1. Eine Packung, enthaltend Wirkgarne,
wobei jedes Wirkgarn (4) eine Vielzahl in Längsrichtung angeordneter verstärkender Fasergarne (40) und aufgeschäumten Graphit (41) beinhaltet, der mit mindestens einer Seite der verstärkenden Fasergarne (40) mittels Klebstoffen integral gebondet ist,
eine Vielzahl von Wirkgarnen (4), die in Form eines Kernglieds (2) zusammengesetzt sind, und
eine Vielzahl von Wirkgarnen (4), die zur Bildung eines Flechtkörpers (3), der das Kernglied (2) an seiner Außenfläche bedeckt, zusammengesetzt sind.

2. Eine Packung, enthaltend Wirkgarne,
wobei jedes Wirkgarn (4) eine Vielzahl in Längsrichtung angeordneter verstärkender Fasergarne (40) und aufgeschäumten Graphit (41) beinhaltet, der mit mindestens einer Seite der verstärkenden Fasergarne (40) mittels Klebstoffen integral gebondet ist, und
eine Vielzahl von Wirkgarnen (4), die zusammengesetzt und verflochten werden.

3. Eine Packung, enthaltend Wirkgarne,
wobei jedes Wirkgarn (4) eine Vielzahl in Längsrichtung angeordneter verstärkender Fasergarne (40) und aufgeschäumten Graphit (41) beinhaltet, der mit mindestens einer Seite der verstärkenden Fasergarne (40) mittels Klebstoffen integral gebondet ist, und
eine Vielzahl von Wirkgarnen (4), die zusammengesetzt und verdrillt werden.

4. Eine Packung gemäß Anspruch 1, 2 oder 3, wobei der aufgeschäumte Graphit (41) die Form von raupenartigem Graphitpulver hat.

5. Eine Packung gemäß Anspruch 1, 2 oder 3, wobei der aufgeschäumte Graphit (41) die Form einer Folie geringer Breite hat.

6. Eine Packung gemäß Anspruch 1, 2, 3, 4 oder 5, wobei jedes Wirkgarn (4) eine Vielzahl in Längsrichtung angeordneter verstärkender Fasergarne (40) und aufgeschäumten Graphit (41) beinhaltet, der mit mindestens einer Seite der verstärkenden Fasergarne (40) mittels Klebstoffen integral gebondet ist, und diese Wirkgarne (4) verdrillt werden.

7. Eine Packung gemäß Anspruch 1, 2 oder 3, wobei die verstärkenden Fasergarne (40) aus mindestens einem aus organischen Fasern ausgewählten Material wie z.B. Baumwollfasern, Kunstseidefasern, Phenolfasern, Aramidfasern, PBI-Fasern, PTFE-Fasern, PPS-Fasern, PEEK-Fasern oder ähnlichem bestehen.

8. Eine Packung gemäß Anspruch 1, 2 oder 3, wobei die verstärkenden Fasergarne (40) aus mindestens einem aus anorganischen Fasern ausgewählten Material wie z.B. Glasfaser, Kohlenstoffaser, Keramikfaser oder ähnlichem bestehen.

9. Eine Packung gemäß Anspruch 1, 2 oder 3, wobei das verstärkende Fasergarn (40) aus mindestens einem aus Metalldrahtgliedern ausgewählten Material wie z.B. Edelstahl, Inconel, Monel-Metall oder ähnlichem besteht.

10. Eine Packung gemäß Anspruch 1, 2 oder 3, wobei das verstärkende Fasergarn (40) ein Verbundfasergarn aus (i) mindestens einem aus organischen Fasern ausgewählten Material und aus (ii) mindestens einem aus anorganischen Fasern und Metalldrahtgliedern zusammengesetzten Material besteht.

11. Eine Packung gemäß Anspruch 1, 2 oder 3, wobei das verstärkende Fasergarn (40) beinhaltet
ein Fasergarn oder ein Verbundfasergarn aus mindestens einem aus den anorganischen Fasern ausgewählten Material und den Metalldrahtgliedern enthält,
wobei das Fasergarn an seiner Oberfläche von kurzen Fasern (6) oder kurzen Verbundfasern aus mindestens einem der aus den organischen Fasern ausgewählten Material bedeckt ist.

12. Eine Packung gemäß Anspruch 1, 2 oder 3, wobei das verstärkende Fasergarn (40) ein Fasergarn oder Verbundfasergarn aus mindestens einem aus den anorganischen Fasern ausgewählten Material und den Metalldrahtgliedern besteht, wobei das Fasergarn oder Verbundfasergarn an seiner Oberfläche mit einer Zellstoffolie (7) bedeckt ist.

13. Eine Packung gemäß Anspruch 1, 2 oder 3, wobei das verstärkende Fasergarn (40) ein Garn beinhaltet, das durch Verdrillen organischer Fasern und anorganischer Fasern oder Metalldrahtglieder erzeugt wird.

14. Eine Packung gemäß Anspruch 1, 2 oder 3, wobei das verstärkende Fasergarn (40) durch Verwirken organischer Fasern, anorganischer Fasern oder Metalldrahtglieder erzeugt wird.

15. Eine Packung gemäß Anspruch 1, 2 oder 3, wobei das verstärkende Fasergarn (40) eine Vielzahl in Längsrichtung und parallel zueinander angeordneter anorganischer Fasern oder Metalldrahtglieder und organische Fasern, die mit den anorganischen Fasern bzw. Metalldrahtgliedern verfitzt sind, enthält, so daß die anorganischen Fasern bzw. Metalldrahtglieder parallel zueinander ausgerichtet bleiben.

## Revendications

1. Garniture d'étanchéité comprenant des fils à tricoter, chacun desdits fils à tricoter (4) comprenant une pluralité de fils en fibres de renforcement (40) disposés longitudinalement et du graphite expansé (41) lié solidairement au moyen d'adhésifs à un côté au moins desdits fils en fibres de renforcement (40), une pluralité desdits fils à tricoter (4) étant assemblée pour donner un organe formant noyau (2), et une pluralité desdits fils à tricoter (4) étant assemblée pour donner un corps tressé (3) qui recouvre ledit organe formant noyau (2) sur le pourtour extérieur de celui-ci.

2. Garniture d'étanchéité comprenant des fils à tricoter, chacun desdits fils à tricoter (4) comprenant une pluralité de fils en fibres de renforcement (40) disposés longitudinalement et du graphite expansé (41) lié solidairement au moyen d'adhésifs à un côté au moins desdits fils en fibres de renforcement (40), et une pluralité desdits fils à tricoter (4) étant assemblée et tressée.

3. Garniture d'étanchéité comprenant des fils à tricoter, chacun desdits fils à tricoter (4) comprenant une pluralité de fils en fibres de renforcement (40) disposés longitudinalement et du graphite expansé (41) lié solidairement au moyen d'adhésifs à un côté au moins desdits fils en fibres de renforcement (40), et une pluralité desdits fils à tricoter (4) étant assemblée et retordue.

4. Garniture d'étanchéité selon la revendication 1, 2 ou 3, dans laquelle le graphite expansé (41) se présente sous la forme de poudre de graphite analogue à des écailles.

5. Garniture d'étanchéité selon la revendication 1, 2 ou 3, dans laquelle le graphite expansé (41) se présente sous la forme dune feuille dont la largeur est faible.

6. Garniture d'étanchéité selon la revendication 1, 2, 3, 4 ou 5, dans laquelle chacun des fils à tricoter (4) comprend une pluralité de fils en fibres de renforcement (40) disposés longitudinalement et du graphite expansé (41) lié solidairement au moyen d'adhésifs à un côté au moins desdits fils en fibres de renforcement (40), et lesdits fils à tricoter (4) sont retordus.

7. Garniture d'étanchéité selon la revendication 1, 2 ou 3, dans laquelle le fil en fibres de renforcement (40) est constitué par au moins une matière choisie parmi les fibres organiques comme les fibres de coton, les fibres de rayonne, les fibres phénoliques, les fibres aramides, les fibres de polybenzimidazole, les fibres de polytétrafluoréthylène, les fibres de polyphénylsiloxane, les fibres de polyéthyléthylcétone et similaires.

8. Garniture d'étanchéité selon la revendication 1, 2 ou 3, dans laquelle le fil en fibres de renforcement (40) est constitué par au moins une matière choisie parmi les fibres minérales comme les fibres de verre, les fibres de carbone, les fibres céramiques et similaires.

9. Garniture d'étanchéité selon la revendication 1, 2 ou 3, dans laquelle le fil en fibres de renforcement (40) est constitué par au moins une matière choisie parmi les organes métalliques linéaires comme les organes en acier inoxydable, en Inconel, en Monel et similaires.

10. Garniture d'étanchéité selon la revendication 1, 2 ou 3, dans laquelle le fil en fibres de renforcement (40) comprend un fil en fibres composite constitué par :
(i) au moins une matière choisie parmi les fibres organiques, et :
(ii) au moins une matière choisie parmi les fibres minérales et les organes métalliques linéaires.

11. Garniture d'étanchéité selon la revendication 1, 2 ou 3, dans laquelle le fil en fibres de renforcement (40) comprend : un fil en fibres ou un fil en fibres composite constitué par au moins une matière choisie parmi les fibres minérales et les organes métalliques linéaires, ledit fil en fibres étant recouvert sur sa surface de fibres courtes (6) ou des fibres courtes composites constituées par au moins une matière choisie parmi les fibres organiques.

12. Garniture d'étanchéité selon la revendication 1, 2 ou 3, dans laquelle le fil en fibres de renforcement (40) comprend un fil en fibres ou un fil en fibres composite constitué par au moins une matière choisie parmi les fibres minérales et les organes métalliques linéaires, ledit fil en fibres ou ledit fil en fibres composite étant recouvert sur sa surface d'une pâte (7) en forme de feuille.

13. Garniture d'étanchéité selon la revendication 1, 2 ou 3, dans laquelle le fil en fibres de renforcement (40) comprend un fil qui est obtenu en retordant des fibres organiques et des fibres minérales ou des organes métalliques linéaires.

14. Garniture d'étanchéité selon la revendication 1, 2 ou 3, dans laquelle le fil en fibres de renforcement (40) comprend un fil qui est obtenu en tricotant les fibres organiques, les fibres minérales ou les organes métalliques linéaires.

15. Garniture d'étanchéité selon la revendication 1, 2 ou 3, dans laquelle le fil en fibres de renforcement (40) comprend une pluralité de fibres minérales ou d'organes métalliques linéaires disposés longitudinalement et parallèlement entre eux et des fibres organiques emmêlées avec lesdites fibres minérales ou lesdits organes métalliques linéaires d'une manière telle que lesdites fibres minérales ou lesdits organes métalliques linéaires soient maintenus parallèles les uns aux autres.
